# EUROPEAN PATENT APPLICATION

(11) **EP 0 549 565 A2**
(43) Date of publication of application: **30.06.1993**
(21) Application number: 93102371.7
(22) Date of filing: 27.07.1987
(51) Int. Cl.: E01F 9/01, F16F 1/48

(54) **Resilient mounting device**

(30) Priority: 09.09.1986 US 905673
(62) Divisional of application: 87306614.6
(71) Applicant: MARKETING DISPLAYS INC., Farmington Hills, Michigan 48331-3041 (US)
(72) Inventor: Hillstrom, David Uno, Michigan 48050 (US); Cope, Dennis Ray, Kent, Ohio 44240 (US)
(74) Representative: Senior, Alan Murray

(57) **Abstract**

5A resilient mounting is divided for use between a base and a sign frame support and has a torsion signing assembly comprising a concentric shaft, an annular elastomeric member and a sleeve.

The shaft is connected to one of the base and frame support, and the sleeve to the other. The mounting has applicability other than in sign stand assemblies.

## Description

The present invention relates to resilient mounting device for mounting a first member to a second member and is illustrated as a connection between a frame and a base, for instance as is used in a sign mounting or stands, but is also applicable to devices other than sign assemblies. More specifically the invention relates to such assemblies that are relatively stable in the face of winds or other forces.

According to the present invention, there is provided a resilient mounting device for mounting a first member to a second member,

said device comprising a torsion support interconnecting means comprising a shaft member having an annulus of elastomeric material bonded thereon as a yieldable member, and a housing member surrounding the outer periphery of said elastomeric annulus to compress said elastomeric annulus, said housing member being bonded to said elastomeric annulus, one of said members of said torsion support means being connected to said first member and the other one of said members being connected to said second member for providing a pivotal connection between said first and second members. In the illustrated embodiment the first member is a pivotally upstanding frame support and the second member is a base having stationary ground engaging means, the frame support being for displaying a sign or the like.

The interconnection between the base and the frame support allows the frame support to pivot with respect to the base from a generally upright position to a deflected position, in response to wind or other forces. It should be noted that the term "upright" used herein refer, not only to a vertically upwards orientation, but also any other orientation that is "upright" relative to the base, e.g. horizontal, slanting or downwards orientations.

The invention permits the use of one or more common designs to provide a wide variety of load- bearing capabilities for assemblies using common support member or other components, by the use of deflectable elastomeric member whose size and deflection characteristics can be varied within the frame work of relatively rigid outer sleeves or shells and inner sleeve shaft or rod members having constant dimensions.

The invention will be further understood from the following description, when taken together with the attached drawings which are given by way of example only and in which:
Figure 1 is an enlarged side elevational view of a torsion spring of an embodiment of the invention, showing the positioning of the mounting brackets in accordance with the present invention;
Figure 2 is a cross-sectional view of the torsion spring taken generally along line 22-22 of Figure 1;
Figure 3 is a front elevational view of another modified embodiment of a torsion spring with the mounting bracket and with a portion thereof broken away to show the torsion spring in cross-section;
Figure 4 is a side elevational view of the modified embodiment of the torsion spring and mounting bracket of Figure 3;
Figure 5 is a perspective view of still a further modified embodiment of the invention showing a torsion spring interconnecting the base to a sign or poster display device;
Figure 6 is a perspective view of another sign or poster display device with a modified form of torsion spring interconnecting means;
Figure 7 is an enlarged side elevational view of a torsion spring shown in Figure 6, with the modified interconnecting means partly in cross-section to illustrate the end portion thereof;
Figure 8 is a cross-sectional view of the torsion spring and support taken generally along line 28-28 of Figure 7, showing the spring in a plan view;
Figure 9 is a fragmentary plan view, partly in cross-section, of a modified form of the end portion of a torsion spring shown in Figure 8; and,
Figure 10 is a perspective view of another sign or poster display device with a spring mounted base.

The resilient mounting device is shown in the drawings used in a sign display stand. However it should be noted that the present invention is not limited to the sign-supporting embodiments shown for purposes of illustration but also has applicability in devices other than sign stand assemblies.

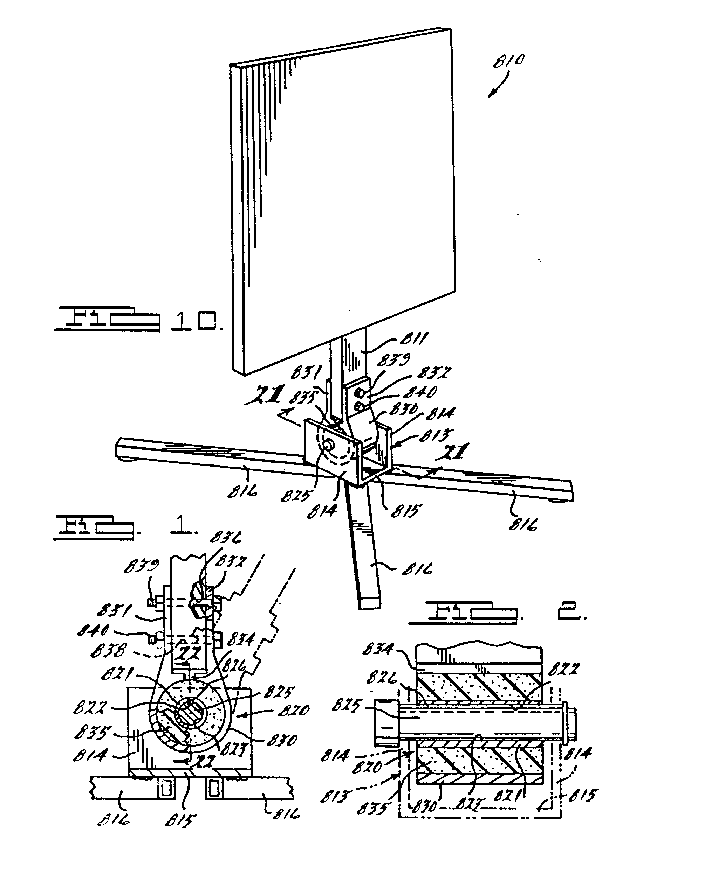

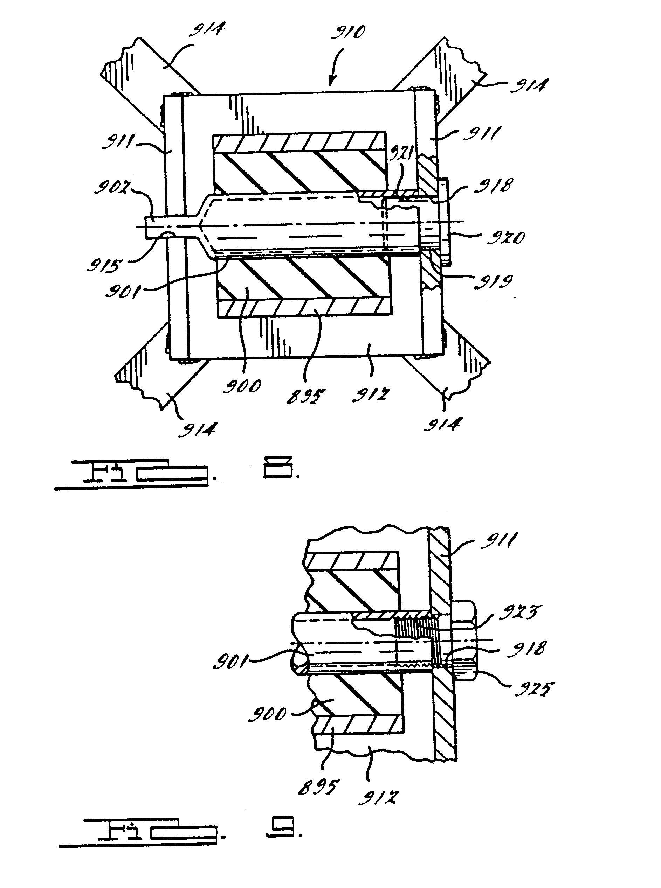

Referring to Figures 1 to 10 of the drawings, wherein like reference numerals refer to like parts throughout the several views, there is shown in Figure 10 a poster display device or means 810 having an upstanding frame structure with a suitable downwardly extending support or support bar 811 which may be rectangular or tubular. Such means 810 is a frame structure, however, in the example described as shown as a display device that is adapted to have mounted thereon an advertising sign, poster, or the like.

Such poster display device is mounted on a base which has a U-shaped bracket 813 having a pair of vertically disposed plates 814 and a bottom plate 815 interconnecting such vertically disposed plates 814. Such plates may be a single U-shaped member. A plurality of horizontally extending legs 816 are suitably connected to the bottom plate 815 in a manner well known in the art to provide ground engaging means.

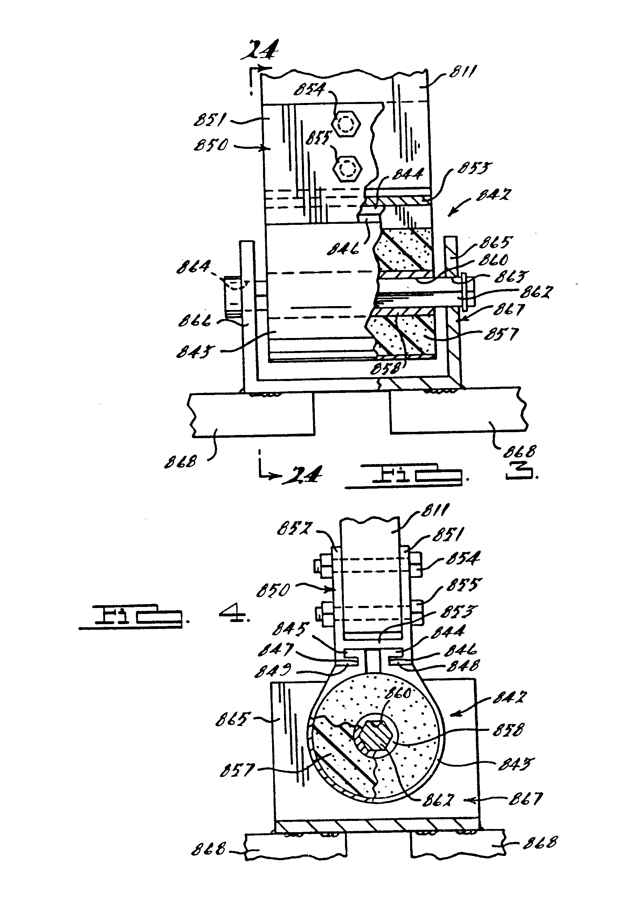

A torsion spring 820 shown in Figures 1 and 2 has a cylindrical shaft member or sleeve 821 with a keyway 822 extending therethrough along its inner bore 823. Mounted within bore 823 is an elongated shaft 825 having a keyway therein for receiving a key 26 (Figure 2) to secure the shaft 825 and the torsion spring 820 together. The respective ends of shaft 825 are secured to the vertically disposed plates 814 as by independent keys or other suitable means.

A generally cylindrical housing member or shell 830 has a pair of outwardly extending legs or leg members 831 and 832 for attaching the torsion spring to the poster display device in a manner to be described. The cylindrical housing member 830 is a circumferential shell with a gap 834 formed along its upper circumference between the respective leg members 831 and 832. The respective leg members each have a pair of aligned bolt holes.

A rubber sleeve or annulus of elastomeric material 835, the spring element in the torsion spring, is molded and vulcanized in the space between the shaft member or sleeve 821 and the cylindrical housing member 830, preferably with the use of a suitable rubber-to-metal adhesive and under compression. During the molding process, the rubber fills the entire space between the sleeve 821 and the housing member or shell 830 and is bonded firmly thereto.

After attaching the respective ends of the shaft 825 to the end brackets or vertically disposed plates 814, the depending support bar 811 of the poster display device is slid dawn between leg members 831 and 832 such that the aligned bolt holes in such leg members 831 and 832 are also aligned with bores 836 and 838 in the support bar 811 to facilitate the reception of bolts 839 and 840 to interconnect the torsion spring to the poster display device 810. Such housing 830 in its split form as part of the torsion spring itself also functions as a clamp for attachment to other fixtures to facilitate its action as part of the torsion spring. Such split outer shell or housing helps to relieve shrinkage stress of the rubber spring sleeve 835 and permits controlled compression of the rubber for greater fatigue life.

In the operation of the poster display device 810, such device 810 will be biased by the torsion spring into an upright position. The depending bar 811 of the poster device is clamped by the leg members 831 and 832 of the torsion spring 820 and as an external force is exerted on the poster display device 810, the display device will deflect as shown in phantom lines in Figure 1 to exert a torsion in the rubber of sleeve 835 whose radial innermost surface is held against rotation by the sleeve 821 and its keyed connection to shaft 825. Whenever the external forces are relieved, the torsion spring will return the poster display device 810 to its normal vertical position.

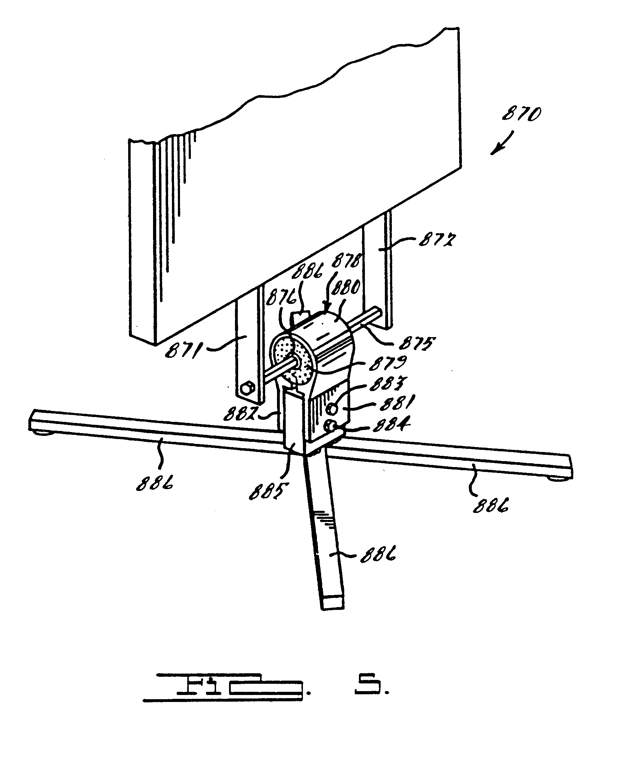

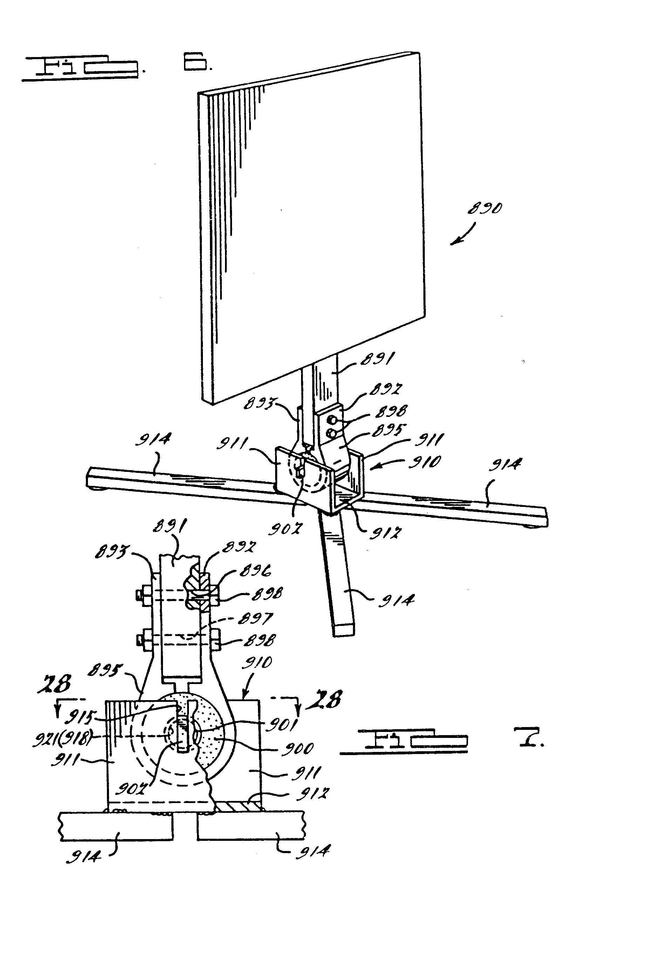

A modification of the above described device is shown in Figures 3 and 4, with the torsion spring designated by reference numeral 842. Torsion spring 842 has a cylindrical housing or outer shell 843 with a pair of outwardly extending leg members 844 and 845. In this embodiment, such leg members 844 and 845 are much shorter in length than the initial described embodiment of leg members 831 and 832. Such leg members 844 and 845 are recessed as at 846 and 847 to receive a pair of connecting links 848 and 849 of an attaching bracket 850. Bracket 850 has a pair of vertically disposed side plates 851 and 852 interconnected by a horizontally extending portion 853. Bracket 850 is slid into position when leg members 844 and 845 of shell 843 are moved toward each other permitting the sliding of such connecting links 848 and 849 into the recessed portions 846 and 847 of leg members 844 and 845.

The respective plates 851 and 852 have pairs of vertically spaced bores for alignment with bores in the support bar 811 and receive bolts 854 and 855 to secure the poster display device 810 and its support bar 811 to the torsion spring 842.

The shell 843 of the torsion spring 842 has its inner surface bonded to an elastomeric or rubber sleeve 857 similar to rubber sleeve 835, which sleeve 857 in turn has its inner circumferentially extending surface bonded to an inner metallic sleeve 858. Inner sleeve 858 has an outer circular surface and an inner non-linear perimeter that defines a polygonal aperture 860. A shaft 862 that is hexagonal in cross-section is frictionally received by aperture 860 and hexagonal apertures 863 and 864 in side plates 865 and 866 of a U-shaped bracket 867. Shaft 862 is thus connected to the side plates 865 and 866. Such shaft 862 may be keyed to the side plates 865 and 866 or connected thereto in other manners to prevent axial movement of shaft 862. Bracket 867 has a plurality of ground engaging leg members 868 suitably connected thereto.

Once the torsion spring 842 with the leg members 844 and 845 are connected to the attaching bracket 850, the manner of attachment to the support bar 811 is similar to the first described embodiment. With the rubber component such as sleeve 857 of the torsion spring being in compression, the fatigue life of such rubber sleeve component will be increased materially.

A further modified embodiment of the invention is shown in Figure 5 wherein a poster display device or means 870 is suitably connected to a pair of depending brackets 871 and 872 forming a support frame. Such brackets 871 and 872 have a pair of aligned polygonal apertures that receive a shaft 875 that is polygonal in cross-section. Shaft 875 is frictionally received by the inner polygonal bore of sleeve 876 of a torsion spring 878. The cylindrical outer surface of sleeve 876 is bonded to a rubber sleeve or annulus of elastomeric material 879, the spring element in the torsion spring 878. The outer surface of rubber sleeve 879 is bonded to the inner cylindrical surface of a housing member or shell 880 which has a gap formed along its lower circumference as shown in Figure 5, similar to the above-described embodiments. Such rubber sleeve 879 is molded and vulcanized in the space between the sleeve 876 and the cylindrical housing member or shell 880 preferably with the use of a suitable rubber-to-metal adhesive and under compression. During such molding process, the rubber fills the entire space between the sleeve 876 and the shell 880 and is firmly bonded thereto.

The outer shell 880 has a pair of outwardly extending legs or leg members 881 and 882 for attaching the torsion spring to an upwardly extending bracket 885 which has a plurality of ground engaging supports 886 suitably connected thereto. Bracket 885 has a pair of vertically aligned bores which are adapted to register with bores in leg members 881 and 882 to receive bolts 883 and 884 for connecting these members together while operative to exert a compressive force on the rubber sleeve 879 to thereby materially increase the fatigue life of the rubber component.

A further modification of the above described embodiments is shown in Figures 6 through 9 wherein a poster display device 890 is suitably connected to a depending bracket 891 forming a support frame. Such bracket 891 is connected to a pair of spaced outwardly extending leg members 892 and 893 of an outer shell 895. The respective leg members 892 and 893 have suitable apertures aligned with apertures 896 and 897 in bracket 891 to facilitate the reception of bolts 898 for interconnecting such leg members to the bracket 891. An annular elastomeric member 900 has its outer surface suitably bonded to the inner peripheral surface of outer shell 895 similar to the prior described embodiments.

The inner circumferentially extending surface of the elastomeric annular member 900 is suitably bonded to the outer surface of a tubular metal sleeve 901, which sleeve 901 has a flattened extension 902.

Such above described torsion spring is mounted in a base which has a U-shaped bracket 910 having a pair of vertically disposed plates 911 and a bottom plate 912 interconnecting such vertically disposed plates 911. Such plates may be a single U-shaped member. A plurality of horizontally extending legs 914 are suitably connected to the bottom plate 912 as by welding. The one vertical plate 911 of bracket 910 has a slot 915 to receive the flattened extension 902 of sleeve 901. The other vertical plate 911 of bracket 910 has an aperture 918 to receive the cylindrical portion 919 of plug 920. The outer end portion of plug 920 is frictionally received by the end bore 921 of tubular sleeve 901 that is opposite the flattened extension 902 of such sleeve 901 to retain the torsion spring on the U-shaped bracket 910 of the base. In lieu of the friction fit, the end portion of the bore 921 may be threaded as at 923 to receive a threaded plug 925 which facilitates the interconnection of the torsion spring onto the base. Such elastomeric member 900 is molded and vulcanized in the space between the sleeve 901 and the outer shell 895 which has a gap formed along its leg members 892 and 893. Such elastomeric sleeve 900 is molded and vulcanized in the space between the sleeve 901 and the outer shell 895 preferably with the use of a suitable rubber-to-metal adhesive and under compression. During such molding process, the elastomeric material fills the entire space between the sleeve 901 and the shell 895 and is firmly bonded thereto.

## Claims

1. A resilient mounting device for mounting a first member to a second member,
said device comprising a torsion support interconnecting means comprising a shaft member having an annulus of elastomeric material bonded thereon as a yieldable member, and a housing member surrounding the outer periphery of said elastomeric annulus to compress said elastomeric annulus, said housing member being bonded to said elastomeric annulus, one of said members of said torsion support means being connected to said first member and the other one of said members being connected to said second member for providing a pivotal connection between said first and second members.

2. A resilient mounting device according to claim 1, wherein said housing member has a split therein to define a gap, said housing member having a pair of spaced legs at said gap to facilitate the compression of said elastomeric material upon connection of said legs.

3. A mounting device according to claim 2, wherein said second member has an upwardly extending bracket, the spacing between said legs being greater than the width of said upwardly extending bracket to provide compression of said elastomeric material as said legs are connected to said bracket.

4. A mounting device according to claim 2, wherein said first member has a depending rod, the spacing between said legs being greater than the width of said depending rod to provide compression of said elastomeric material as said legs are connected to said rod.

5. A mounting device according to claim 4, wherein said shaft member is polygonal in cross section, and said second member has a pair of spaced plates with polygonal apertures for receiving the ends of said shaft member.

6. A mounting device according to claim 4, wherein each of said legs has grooves and a bracket is provided which has a pair of vertically disposed side plates and a pair of links, said links extending into said grooves to exert a compressive force on said annulus of elastomeric material, and said side plates being attached to said first member.

7. A resilient mounting device according to claim 1, wherein said second member includes a pair of spaced upstanding plates, one of said plates having a slot therein, said one member of said torsion support means being a sleeve with a flattened end extending into said slot.

8. A resilient mounting device according to claim 7, wherein said sleeve is a tubular member with a bore at the end opposite said flattened end adapted to receive a plug, said plug being connected to the other one of said upstanding plates.

9. A resilient mounting device according to claim 8, wherein said bore is threaded, and said plug is threadedly connected to said bore.

10. A resilient mounting device for mounting a first member structure to a second member, said first member having a depending support means, said second member having a rubber torsion spring means for interconnecting said second member to said depending support means, said rubber torsion spring having an inner shaft securable to said second member, said inner shaft being keyed to a rigid sleeve member, a sleeve of rubber bonded internally to said rigid sleeve member, and an outer shell having a pair of outwardly extending legs, said shell being bonded to the external surface of said rubber sleeve and being split to define a gap between said legs, said gap being greater in width than the width of said depending support means, said legs being connected to said depending support means to exert a compressive force on said rubber sleeve.

11. A mounting device according to claim 10, wherein each of said leg members has a groove therein, a U-shaped bracket being provided which has a pair of abutments adapted to be slidingly received in said grooves, and said U-shaped bracket being adapted to compress said rubber sleeve and be connected to said depending support means.

12. A resilient mounting device according to any preceding claim, wherein said first member is a pivotally upstanding frame support and said second member is a base having stationary ground engaging means.
